# EUROPEAN PATENT APPLICATION

(11) **EP 4 818 957 A1**
(43) Date of publication of application: **07.10.2026**
(21) Application number: 25167989.0
(22) Date of filing: 02.04.2025
(51) Int. Cl.: G06F 30/12, G06F 30/23, G06T 17/00, G06F 119/14, G06T 19/20

(54) **SKETCH-BASED 3D OBJECT GENERATION AND SIMULATION SYSTEM**

(71) Applicant: Siemens Industry Software NV, 3001 Leuven (BE)
(72) Inventor: Gavranovic, Stefan, 85640 Putzbrunn (DE); Sereyjol-Garros, Nicolas, 59420 Mouvaux (FR); Ilic, Slobodan, 81547 München (DE); Zhu, Dekai, 81379 München (DE)
(74) Representative: Siemens Patent Attorneys

(57) **Abstract**

The present disclosure provides a computer-implemented method for generating and simulating 3D objects. The method includes receiving a 2D sketch of an object, identifying one or more load points on the 2D sketch, generating a 3D-model of the object using an artificial intelligence model based on the 2D sketch, performing a structural analysis simulation on the 3D-model, and outputting simulation results based on the structural analysis simulation. The method enables rapid conversion of 2D sketches into simulatable 3D models, facilitating iterative design and analysis processes. A system and non-transitory computer-readable storage medium for implementing the method are also provided.

## Description

### FIELD OF INVENTION

The present disclosure relates to computer-aided design and simulation systems, and more particularly to a system for generating and simulating 3D objects from 2D sketches using artificial intelligence and structural analysis techniques.

### BACKGROUND

Computer-aided design (CAD) and simulation tools have become essential in various industries for product development and engineering analysis. These tools allow designers and engineers to create digital representations of objects and simulate their behavior under different conditions. However, traditional CAD systems often require significant expertise and time to create detailed 3D models, especially when starting from conceptual sketches.

The integration of artificial intelligence (Al) and machine learning techniques with CAD systems has opened new possibilities for automating and streamlining the design process. Recent advancements in computer vision and deep learning have enabled the development of systems that can interpret 2D sketches and generate corresponding 3D models. These AI-powered tools have the potential to bridge the gap between initial concept sketches and detailed 3D representations, allowing for faster iteration and prototyping.

US-10963599-B2 discloses a system for utilizing 3D CAD point-cloud data to automatically create fluid models. This prior art demonstrates the application of machine learning techniques to predict characteristics of mechanical devices based on 3D models. While focused on fluid dynamics, the approach of combining 3D modeling with Al-driven analysis provides a foundation for broader applications in computer-aided engineering.

US-20090094574-A1 presents a system for creating intelligent simulation objects using graphical process descriptions. This prior art introduces an object-oriented approach to simulation modeling, where new objects can be created by assigning graphical processes to base objects. The concept of building complex models from simpler components relates to the challenge of generating 3D models from 2D sketches and performing subsequent simulations.

WO-2009042129-A2 describes a system for developing simulation models using graphical processes and base objects. This prior art further explores the idea of creating simulation models without extensive programming, emphasizing the importance of user-friendly interfaces for model creation and analysis. The approach of combining graphical elements to build more complex models aligns with the goal of simplifying the transition from 2D sketches to 3D simulations.

Despite these advancements, there remains a need for more intuitive and efficient tools that can seamlessly translate 2D sketches into 3D models suitable for structural analysis and simulation. Current systems often require multiple steps and different software packages to move from initial sketches to final simulations, creating bottlenecks in the design process. Additionally, the accuracy and reliability of Al-generated 3D models for engineering applications present ongoing challenges that need to be addressed.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

According to an aspect of the present disclosure, a computer-implemented method for generating and simulating 3D objects is provided. The method includes receiving, by a computer system, a 2D sketch of an object. The method further includes generating, by the computer system, a 3D-model of the object based on the 2D sketch. The method is characterized in that it further comprises identifying, by the computer system, one or more load points on the 2D sketch. The method also includes generating, by the computer system, the 3D-model of the object using an artificial intelligence model based on the 2D sketch. Additionally, the method involves performing, by the computer system, a structural analysis simulation on the 3D-model. Finally, the method includes outputting, by the computer system, simulation results based on the structural analysis simulation.

According to other aspects of the present disclosure, the computer-implemented method may include one or more of the following features. The method may include receiving, via a user interface of the computer system, user input indicating locations of the load points on the 2D sketch. The method of generating the 3D-model using the artificial intelligence model may comprise encoding, by a processor, the 2D sketch using a pretrained vision transformer; generating, by the processor, an initial 3D voxel grid; applying, by the processor, a discrete wavelet transform to the voxel grid; performing, by the processor, diffusion-based shape refinement on the transformed grid; and applying, by the processor, an inverse discrete wavelet transform to obtain the 3D-model. The discrete wavelet transform may reduce the dimension of the 3D-model to a lower resolution grid.

The method may further comprise determining, by the computer system, whether the simulation results are satisfactory, and if the simulation results are not satisfactory, refining the 2D sketch and repeating the steps of identifying the load points, generating the 3D-model, performing the structural analysis simulation, and outputting the simulation results. The method may also include generating, by the computer system, a smooth mesh of the 3D-model prior to performing the structural analysis simulation. Additionally, the method may involve mapping, by the computer system, the simulation results onto the smooth mesh for visualization.

According to another aspect of the present disclosure, a system for generating and simulating 3D objects is provided. The system includes a user interface configured to receive a 2D sketch of an object. The system is characterized in that it further comprises the user interface configured to identify one or more load points on the 2D sketch. The system also includes an artificial intelligence model configured to generate a 3D-model of the object based on the 2D sketch. Additionally, the system comprises a simulation module configured to perform a structural analysis simulation on the 3D-model and output simulation results.

According to other aspects of the present disclosure, the system may include one or more of the following features. The user interface may be further configured to receive user input indicating locations of the load points on the 2D sketch. The artificial intelligence model may comprise an encoder configured to encode the 2D sketch using a pretrained vision transformer; a voxel grid generator configured to generate an initial 3D voxel grid; a wavelet transformer configured to apply a discrete wavelet transform to the voxel grid; a shape refiner configured to perform diffusion-based shape refinement on the transformed grid; and an inverse wavelet transformer configured to apply an inverse discrete wavelet transform to obtain the 3D-model. The discrete wavelet transform may reduce the dimension of the 3D-model to a lower resolution grid.

The system may further comprise a mesh generator configured to generate a smooth mesh of the 3D-model prior to performing the structural analysis simulation. The simulation module may be further configured to map the simulation results onto the smooth mesh for visualization. The system may also include an iterative refinement module configured to determine whether the simulation results are satisfactory; if the simulation results are not satisfactory, initiate refinement of the 2D sketch; and trigger the user interface, artificial intelligence model, and simulation module to repeat their respective operations with the refined 2D sketch.

According to yet another aspect of the present disclosure, a non-transitory computer-readable storage medium storing instructions is provided. When executed by a processor, the instructions cause the processor to perform operations comprising receiving a 2D sketch of an object and generating a 3D-model of the object based on the 2D sketch. The operations are characterized in that they further comprise generating the 3D-model of the object using an artificial intelligence model based on the 2D sketch; applying one or more load points to the 3D-model; performing a structural analysis simulation on the 3D-model with the applied load points; and outputting simulation results based on the structural analysis simulation.

According to other aspects of the present disclosure, the operations performed by the processor when executing the instructions stored on the non-transitory computer-readable storage medium may include one or more of the following features. Generating the 3D-model using the artificial intelligence model may comprise encoding the 2D sketch using a pretrained vision transformer; generating an initial 3D voxel grid; applying a discrete wavelet transform to the voxel grid; performing diffusion-based shape refinement on the transformed grid; and applying an inverse discrete wavelet transform to obtain the 3D-model. The discrete wavelet transform may reduce the dimension of the 3D-model to a lower resolution grid.

The operations may further comprise generating a smooth mesh of the 3D-model prior to performing the structural analysis simulation. The operations may also include mapping the simulation results onto the smooth mesh for visualization. Additionally, the operations may involve determining whether the simulation results are satisfactory; if the simulation results are not satisfactory, refining the 2D sketch; and repeating the operations of generating the 3D-model, applying the load points, performing the structural analysis simulation, and outputting the simulation results using the refined 2D sketch.

The foregoing general description of the illustrative embodiments and the following detailed description thereof are merely exemplary aspects of the teachings of this disclosure and are not restrictive.

### BRIEF DESCRIPTION OF FIGURES

Non-limiting and non-exhaustive examples are described with reference to the following figures.
FIG. 1 illustrates 2D-sketch showing an orthogonal view of a 3D-object, according to aspects of the present disclosure.
FIG. 2 illustrates the addition of load points to the 2D-sketch of figure 1, according to aspects of the present disclosure.
FIG. 3 illustrates an isometric view of a 3D-model generated from the 2D sketch as shown in figures 1, 2, according to aspects of the present disclosure.
FIG. 4 illustrates an isometric view of simulation results using the shape of the 3D-model as shown in figures 3, according to aspects of the present disclosure.
FIG. 5 illustrates a flowchart for generating and simulating 3D objects from 2D sketches, according to an embodiment.
FIG. 6 illustrates a flowchart for reviewing and refining simulation results, according to aspects of the present disclosure.
FIG. 7 illustrates a flowchart for generating a 3D shape from a 2D sketch, according to an embodiment.
FIG. 8 illustrates a flowchart for generating and simulating a 3D shape from a 2D sketch, according to aspects of the present disclosure.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The present disclosure relates to a system and method for generating and simulating three-dimensional (3D) objects based on two-dimensional (2D) sketches. The system includes a non-transitory computer-readable storage medium storing instructions that, when executed by a processor, cause the processor to perform operations for creating and analyzing 3D models.

The system employs an artificial intelligence (AI) model to generate 3D representations from 2D sketches. This Al model utilizes a diffusion model-based approach that operates on 3D voxelized data. The diffusion model allows for the gradual refinement of the 3D shape, starting from an initial noisy state and progressively improving the representation to match the input sketch.

The workflow of the system begins with the input of a 2D sketch. The system then processes this sketch to generate a corresponding 3D model. Once the 3D model is created, the system applies load points and boundary conditions to prepare for structural analysis. The system then performs a simulation to analyze the structural properties of the generated 3D object.

After the simulation, the system outputs the results, which include information about the object's behavior under the specified conditions. These results are presented in a format that allows for easy interpretation and analysis by the user.

The system provides an iterative approach, allowing users to refine their designs based on the simulation results. If the results are not satisfactory, users have the option to modify the original sketch or adjust the load points, and then repeat the process of 3D model generation and simulation.
This integrated approach to sketch-based 3D object generation and simulation offers a streamlined workflow for designers and engineers, enabling rapid prototyping and analysis of complex structures from simple 2D sketches.

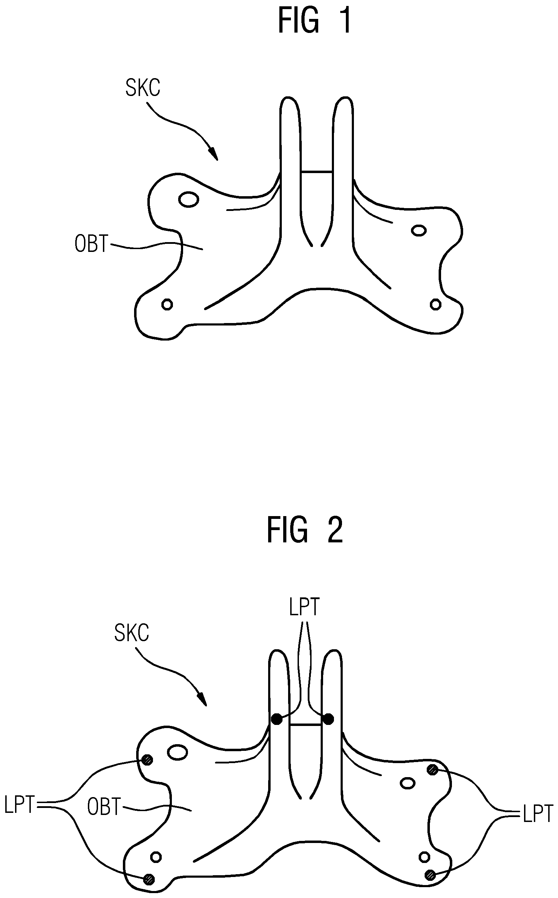

The system includes a user interface configured to receive a two-dimensional (2D) sketch SKC of an object OBT. Figure 1 illustrates an orthogonal view of an object OBT and a corresponding sketch SKC. The sketch SKC represents a simplified, two-dimensional representation of the object OBT, capturing the main contours and features using lines and curves.

The sketch SKC demonstrates how a complex three-dimensional object OBT can be represented in a two-dimensional format. This comparison between the object OBT and its sketch SKC illustrates the process of translating a physical object into a simplified drawing, which is useful in design, engineering, and manufacturing contexts.

The system supports various input formats for the sketch SKC, including JPEG and PNG. This flexibility allows users to create sketches using a wide range of digital drawing tools or to scan hand-drawn sketches for input into the system.

Creating a 2D sketch SKC is the initial step in the workflow of the system. The sketch SKC serves as the foundation for generating the 3D model and subsequent simulation processes. The accuracy and detail of the sketch SKC directly influence the quality of the generated 3D model and the accuracy of the simulation results.

The user interface of the system provides tools for creating and editing the sketch SKC. Users can draw freehand or use geometric primitives to create the sketch SKC. The interface also allows for precise measurements and annotations to be added to the sketch SKC, ensuring that critical dimensions and features of the object OBT are accurately represented.

The system includes a user interface configured to identify one or more load points LPT on the sketch SKC. Figure 2 illustrates an orthogonal view of the object OBT, which appears to be a mounting bracket or structural component. The figure shows the sketch SKC of the object OBT, providing a simplified representation of its form and features.

The sketch SKC includes several load points LPT, indicated by markers. Two load points LPT are shown in red, positioned at the top of each protruding element near the circular holes. These load points LPT represent areas where forces or loads are applied to the object OBT. Additionally, four load points LPT are visible, one at each corner of the base platform. These load points LPT indicate fixation points or areas of support for the object OBT.

The user interface is configured to receive user input indicating locations of the load points LPT on the sketch SKC. This allows users to specify precisely where forces, constraints, or boundary conditions should be applied in the subsequent simulation process. Users can interact with the sketch SKC directly, marking the desired locations for load application or fixation.

To map the 2D load points LPT to the corresponding locations in the 3D model, the system uses a 3D Digital Differential Analyzer (DDA) algorithm for ray casting. This algorithm efficiently determines which voxels in the 3D model correspond to the user-specified points on the 2D sketch SKC. The system casts rays from the 2D points and identifies the first voxel hit in the 3D space, ensuring accurate translation of load points LPT from the 2D representation to the 3D model.

The identification of load points LPT is a step in the simulation process. These points define where external forces act on the object OBT or where the object OBT is constrained in its movement. By allowing users to specify these points directly on the sketch SKC, the system ensures that the subsequent structural analysis accurately reflects the intended use or testing conditions of the object OBT.

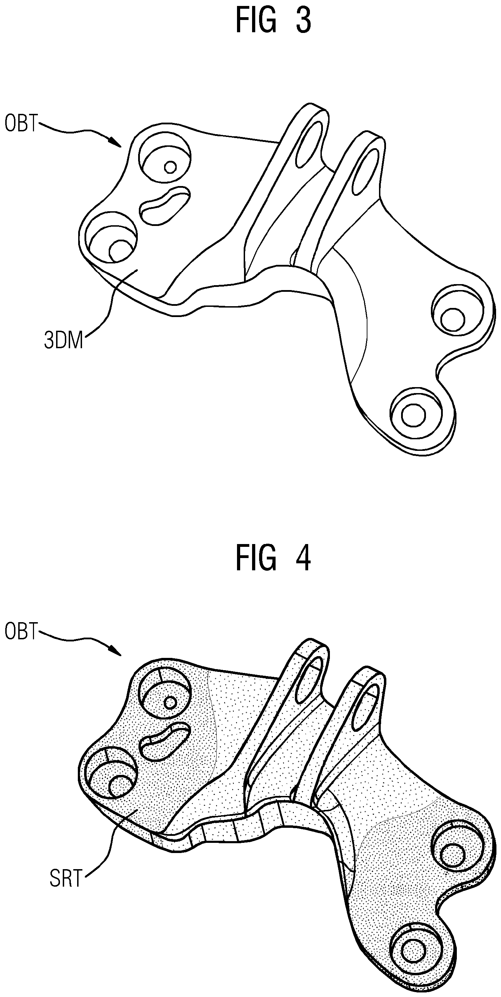

The system generates a 3D-model 3DM of the object OBT based on the sketch SKC. Figure 3 illustrates an isometric view of the 3D-model 3DM generated from the sketch SKC. The 3D-model 3DM represents the object OBT, which is a mounting bracket of a support structure.

The 3D-model 3DM comprises a main body with a flat base and two protruding elements extending from it. The base of the 3D-model 3DM features four circular openings, positioned near the corners of the base. Extending from the base are two perpendicular elements. The first element protrudes vertically from the base and contains a circular opening at its upper portion. The second element extends horizontally from the vertical element, also featuring a circular opening. These openings are aligned to accommodate a bolt for a pivoting mechanism.

The system generates the 3D-model 3DM of the object OBT using an artificial intelligence model based on the sketch SKC. The artificial intelligence model encodes the sketch SKC in this example using a pretrained Vision Transformer (ViT) model known as DINOv2. This encoding process transforms the sketch SKC into a format suitable for further processing by the artificial intelligence model.

After encoding, the artificial intelligence model generates an initial 3D voxel grid. The system represents the 3D-model 3DM as an occupancy grid with resolution 256^3. To reduce computational complexity, the system encodes this occupancy grid to a lower resolution 64^3 grid using a discrete wavelet transform. This transform reduces the dimension of the 3D-model 3DM while preserving essential features.

The artificial intelligence model then performs diffusion-based shape refinement on the transformed grid. This refinement process gradually improves the 3D representation to match the input sketch SKC more closely. The system uses a View-aware Local Attention mechanism in the wavelet domain for local controllability during this refinement process.

After refinement, the artificial intelligence model applies an inverse discrete wavelet transform to obtain the final 3D-model 3DM. This inverse transform reconstructs the full-resolution 3D shape from the lower-resolution representation.

The system uses a single diffusion network rather than multiple models, streamlining the 3D model generation process. The system has an average processing time of around 5 seconds using an RTX 4090 GPU, allowing for rapid generation of 3D models from sketches.

The system supports output 3D model formats including OpenVDB, STL, and OBJ, providing flexibility for further use of the generated 3D-model 3DM in various applications.

To enhance the accuracy of the generated 3D-model 3DM, the system rotates each shape in the dataset to a fixed camera coordinate system. This approach eliminates the need for camera information during inference, simplifying the model generation process.

The system allows users to specify symmetry lines in the sketch SKC to be interpreted as symmetry planes in the 3D-model 3DM. When a user draws a symmetry line, the system evaluates the most likely symmetry plane position by assessing the symmetry appearance of the complete object OBT as sketched. The system then generates identical but mirrored halves of the object OBT in the 3D-model 3DM, ensuring symmetrical features are accurately represented.

The system performs structural analysis simulation on the 3D-model 3DM and outputs simulation results SRT based on the structural analysis simulation. Figure 4 illustrates the visualization of the simulation results SRT mapped onto the 3D-model 3DM of the object OBT.

The simulation results SRT include information about the structural behavior of the object OBT under the specified load conditions. These results SRT are typically represented as color-coded overlays on the 3D-model 3DM, allowing for easy interpretation of stress distributions, deformations, or other relevant structural parameters.

To enhance the visualization of the simulation results SRT, the system generates a smooth mesh of the 3D-model 3DM prior to performing the structural analysis simulation. This smooth mesh provides a more refined surface representation of the object OBT, improving the accuracy and visual quality of the results visualization.

After the structural analysis simulation is complete, the system maps the simulation results SRT onto the smooth mesh. This mapping process involves interpolating the simulation data onto the vertices or faces of the smooth mesh, ensuring that the results SRT are accurately represented on the 3D-model 3DM.

As shown in Figure 4, the mapped simulation results SRT are displayed preferably using a pattern or color gradient overlaid on the 3D-model 3DM. The optical visualization of a gradient represents different levels of stress, strain, or other relevant structural parameters. For example, areas of high stress are typically represented by warmer colors (such as red or orange), while areas of low stress are represented by cooler colors (such as blue or green).

The visualization of the simulation results SRT on the 3D-model 3DM allows users to quickly identify critical areas of the object OBT that require attention or modification. Users are able to rotate, zoom, and interact with the 3D-model 3DM to examine the simulation results SRT from different angles and perspectives.

In addition to the color-coded overlay, the system provides numerical values and legends to quantify the simulation results SRT. These quantitative data help users understand the specific magnitudes of stress, strain, or other parameters at different points on the object OBT.

The system also offers options to display different types of simulation results SRT, such as von Mises stress, principal stresses, deformations, or safety factors. Users are able to switch between these different result types to gain a comprehensive understanding of the object's OBT structural behavior.

By providing this detailed visualization of the simulation results SRT mapped onto the 3D-model 3DM, the system enables users to make informed decisions about design modifications or improvements to the object OBT based on its structural performance.

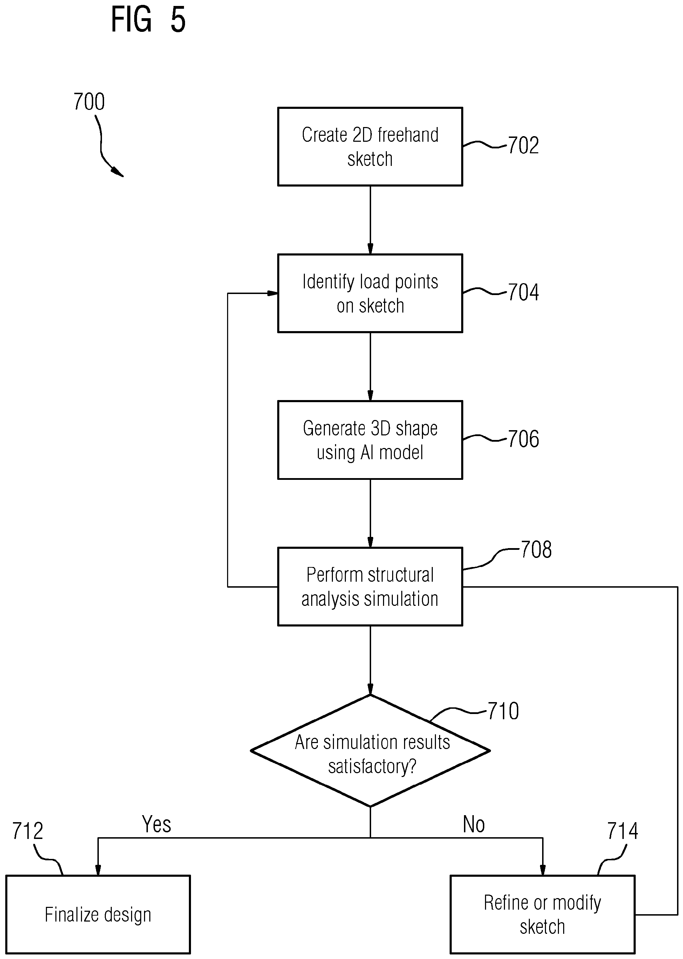

The system implements a method 700 for generating and simulating 3D objects, as illustrated in Figure 5. The method 700 begins with a step 702 of creating a 2D sketch SKC of an object OBT. The system comprises a user interface configured to receive the 2D sketch SKC of the object OBT. This user interface allows designers to input their initial concept directly into the system.

Following the creation of the 2D sketch SKC, the method 700 proceeds to a step 704 of identifying load points on the 2D sketch SKC. The user interface enables the designer to specify areas on the 2D sketch SKC that will be subject to forces or constraints in the subsequent simulation.

The method 700 then advances to a step 706 of generating a 3D-model 3DM using an artificial intelligence model. The system comprises an artificial intelligence model configured to generate the 3D-model 3DM of the object OBT based on the 2D sketch SKC. This step transforms the 2D sketch SKC into a three-dimensional representation using sophisticated artificial intelligence techniques.

Next, the method 700 moves to a step 708 of performing structural analysis simulation. The system comprises a simulation module configured to perform a structural analysis simulation on the 3D-model 3DM and output simulation results SRT. This step involves applying the identified load points and simulating the behavior of the 3D-model 3DM under various conditions.

The method 700 then proceeds to a step 710, where the system determines whether the simulation results SRT are satisfactory. If the simulation results SRT are satisfactory, the method 700 advances to a step 712 of finalizing the design.

If the simulation results SRT are not satisfactory, the method 700 branches to a step 714 of refining or modifying the 2D sketch SKC. After this step, the method 700 loops back to step 704, creating an iterative process for improving the design based on simulation feedback.

The method 700 allows for continuous improvement of the design by iterating between 2D sketch SKC modification, 3D-model 3DM generation, and simulation until satisfactory results are achieved. This iterative approach enables designers to refine their concepts efficiently, leveraging the power of artificial intelligence and simulation to optimize their designs.

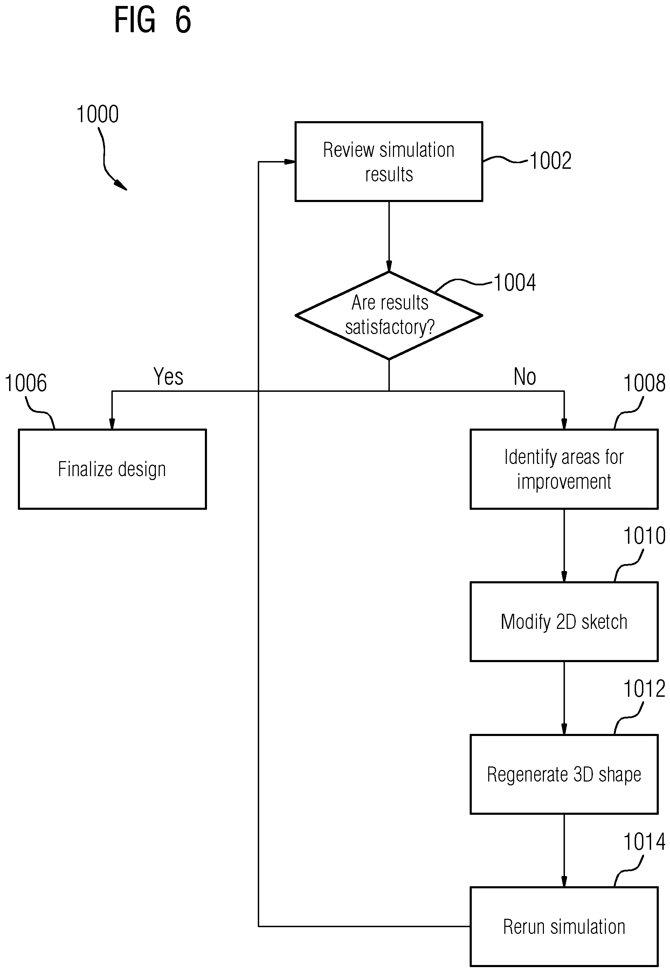

Figure 6 illustrates a method 1000 for reviewing and refining simulation results. The method 1000 begins with a step 1002 of reviewing simulation results.

The method 1000 proceeds to a step 1004 of determining whether the simulation results are satisfactory. The system includes an iterative refinement module configured to determine whether the simulation results are satisfactory. This determination involves evaluating the structural behavior of the object OBT under the specified load conditions.

If the simulation results are satisfactory, the method 1000 advances to a step 1006 of finalizing the design. This step concludes the design process, indicating that the object OBT meets the desired structural requirements.

If the simulation results are not satisfactory, the method 1000 branches to a step 1008 of identifying areas for improvement. The iterative refinement module initiates refinement of the sketch SKC based on the analysis of the simulation results. This step involves identifying specific aspects of the object OBT that require modification to enhance its structural performance.

Following the identification of areas for improvement, the method 1000 proceeds to a step 1010 of modifying the sketch SKC. This step involves making adjustments to the sketch SKC based on the insights gained from the simulation results. The modifications aim to address the identified structural weaknesses or optimize the design of the object OBT.

Once the sketch SKC is modified, the method 1000 advances to a step 1012 of regenerating the 3D-model 3DM based on the modified sketch SKC. This step utilizes the artificial intelligence model to create an updated 3D representation of the object OBT, incorporating the changes made to the sketch SKC.

The method 1000 then proceeds to a step 1014 of rerunning the simulation. This step involves performing a new structural analysis on the regenerated 3D-model 3DM. The iterative refinement module triggers the user interface, artificial intelligence model, and simulation module to repeat their respective operations with the refined sketch SKC.

After step 1014, the method 1000 loops back to step 1002, where the new simulation results are reviewed. This creates an iterative process for refining the design of the object OBT based on simulation feedback. The method 1000 continues this cycle of review, refinement, and simulation until satisfactory results are achieved, ensuring that the final design of the object OBT meets the desired structural requirements.

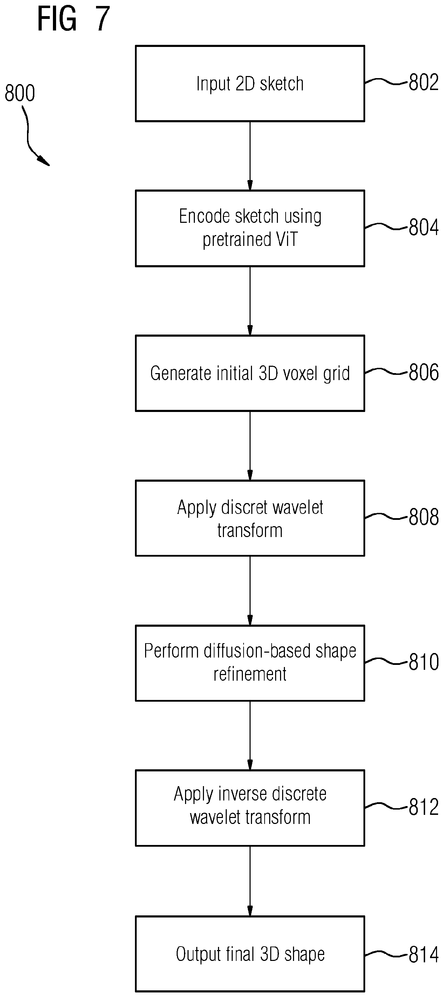

The system implements a method 800 for generating a 3D shape from a 2D sketch, as illustrated in Figure 7. The method 800 begins with a step 802 of inputting a 2D sketch SKC. The system receives the 2D sketch SKC of the object OBT through a user interface.

Following the input of the 2D sketch SKC, the method 800 proceeds to a step 804 of encoding the sketch SKC using a pretrained Vision Transformer (ViT). This step transforms the 2D sketch SKC into a format suitable for further processing by the artificial intelligence model.

The method 800 then advances to a step 806 of generating an initial 3D voxel grid. This step creates a three-dimensional representation of the sketch SKC using voxels, which are 3D pixels. The initial 3D voxel grid serves as the foundation for the subsequent refinement process.

Next, the method 800 moves to a step 808 of applying a discrete wavelet transform. The discrete wavelet transform is applied to the 3D voxel grid, reducing the dimensionality of the data and extracting relevant features. This transform allows for a more compact representation of the 3D shape while preserving essential details.

The method 800 then proceeds to a step 810 of performing diffusion-based shape refinement. This step involves using a diffusion model to refine and improve the 3D shape representation. The diffusion-based shape refinement process gradually enhances the details and accuracy of the 3D model, bringing it closer to the intended shape based on the input sketch SKC.

Following the shape refinement, the method 800 advances to a step 812 of applying an inverse discrete wavelet transform. This step reverses the earlier wavelet transform, reconstructing the full-resolution 3D shape from the refined, lower-dimensional representation.

The final step in the method 800 is step 814, which involves outputting the final 3D-model 3DM. This step produces the completed 3D-model 3DM generated from the initial 2D sketch SKC, ready for further processing or simulation.

The system uses classifier-free guidance with a guidance scale of 2 during inference. This technique enhances the conditioning of the 3D shape generation process on the input sketch SKC, resulting in more accurate and faithful representations of the intended object OBT.

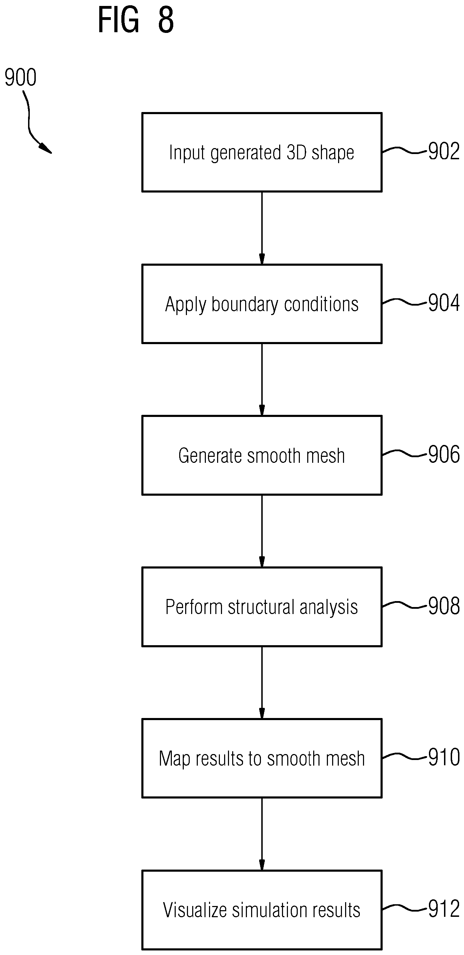

The system implements a method 900 for generating and simulating a 3D shape from a 2D sketch, as illustrated in Figure 8. The method 900 begins with a step 902 of inputting a generated 3D-model 3DM.

Following the input of the 3D-model 3DM, the method 900 proceeds to a step 904 of applying boundary conditions. This step involves defining the constraints and loads on the 3D-model 3DM for simulation purposes. The boundary conditions are derived from the load points LPT identified on the sketch SKC.

The method 900 then advances to a step 906 of generating a smooth mesh. The system includes a mesh generator configured to generate a smooth mesh of the 3D-model 3DM prior to performing the structural analysis simulation. The mesh generator uses a Marching Cubes algorithm followed by Laplacian smoothing to generate a smooth mesh from the voxel grid representation of the 3D-model 3DM. This step creates a refined representation of the 3D-model 3DM suitable for simulation.

Next, the method 900 moves to a step 908 of performing structural analysis. The system performs a structural analysis simulation on the 3D-model 3DM with the applied boundary conditions. This step involves simulating the behavior of the 3D-model 3DM under the specified loads and constraints.

The method 900 then proceeds to a step 910 of mapping results to the smooth mesh. This step involves transferring the simulation results SRT onto the refined 3D representation. The system interpolates the simulation data onto the vertices or faces of the smooth mesh, ensuring that the results SRT are accurately represented on the 3D-model 3DM.

The final step in the method 900 is step 912, which involves visualizing the simulation results SRT. This step produces a visual representation of the structural analysis outcomes. The system displays the mapped simulation results SRT using color gradients or patterns overlaid on the smooth mesh of the 3D-model 3DM, allowing for intuitive interpretation of stress distributions, deformations, or other relevant structural parameters.

The method 900 provides a comprehensive approach to structural analysis and visualization, transforming the input 3D-model 3DM into a simulated and visualized result through a series of mesh generation, analysis, and visualization operations.

A number of implementations have been described. Nevertheless, it will be understood that various modifications may be made without departing from the spirit and scope of the disclosure. Accordingly, other implementations are within the scope of the following claims.

## Claims

1. A computer-implemented method for generating and simulating 3D objects, comprising:
receiving a 2D sketch (SKC) of an object (OBT);
generating a 3D-model (3DM) of the object (OBT) based on the 2D sketch (SKC);
**characterised in that** the method further comprises:
identifying one or more load points (LPT) on the 2D sketch (SKC);
generating the 3D-model (3DM) of the object (OBT) using an artificial intelligence model based on the 2D sketch (SKC);
performing a structural analysis simulation on the 3D-model (3DM); and
outputting simulation results (SRT) based on the structural analysis simulation.

2. The computer-implemented method of claim 1, wherein identifying the one or more load points (LPT) comprises receiving user input indicating locations of the load points (LPT) on the 2D sketch (SKC).

3. The computer-implemented method of claim 1, wherein generating the 3D-model (3DM) using the artificial intelligence model comprises:
encoding the 2D sketch (SKC) using a pretrained vision transformer;
generating an initial 3D voxel grid;
applying a discrete wavelet transform to the voxel grid;
performing diffusion-based shape refinement on the transformed grid; and
applying an inverse discrete wavelet transform to obtain the 3D-model (3DM).

4. The computer-implemented method of claim 3, wherein the discrete wavelet transform reduces the dimension of the 3D-model (3DM) to a lower resolution grid.

5. The computer-implemented method of claim 1, further comprising:
determining whether the simulation results (SRT) are satisfactory; and
if the simulation results (SRT) are not satisfactory, refining the 2D sketch (SKC) and repeating the steps of identifying the load points (LPT), generating the 3D-model (3DM), performing the structural analysis simulation, and outputting the simulation results (SRT).

6. The computer-implemented method of claim 1, further comprising generating a smooth mesh of the 3D-model (3DM) prior to performing the structural analysis simulation.

7. The computer-implemented method of claim 6, further comprising mapping the simulation results (SRT) onto the smooth mesh for visualization.

8. A system for generating and simulating 3D objects, comprising:
a user interface configured to receive a 2D sketch (SKC) of an object (OBT);
**characterised in that** the system further comprises:
the user interface configured to identify one or more load points (LPT) on the 2D sketch (SKC);
an artificial intelligence model configured to generate a 3D-model (3DM) of the object (OBT) based on the 2D sketch (SKC); and
a simulation module configured to perform a structural analysis simulation on the 3D-model (3DM) and output simulation results (SRT).

9. The system of claim 8, wherein the user interface is further configured to receive user input indicating locations of the load points (LPT) on the 2D sketch (SKC).

10. The system of claim 8, wherein the artificial intelligence model comprises:
an encoder configured to encode the 2D sketch (SKC) using a pretrained vision transformer;
a voxel grid generator configured to generate an initial 3D voxel grid;
a wavelet transformer configured to apply a discrete wavelet transform to the voxel grid;
a shape refiner configured to perform diffusion-based shape refinement on the transformed grid; and
an inverse wavelet transformer configured to apply an inverse discrete wavelet transform to obtain the 3D-model (3DM).

11. The system of claim 10, wherein the discrete wavelet transform reduces the dimension of the 3D-model (3DM) to a lower resolution grid.

12. The system of claim 8, further comprising a mesh generator configured to generate a smooth mesh of the 3D-model (3DM) prior to performing the structural analysis simulation.

13. The system of claim 12, wherein the simulation module is further configured to map the simulation results (SRT) onto the smooth mesh for visualization.

14. The system of claim 8, further comprising an iterative refinement module configured to:
determine whether the simulation results (SRT) are satisfactory;
if the simulation results (SRT) are not satisfactory, initiate refinement of the 2D sketch (SKC); and
trigger the user interface, artificial intelligence model, and simulation module to repeat their respective operations with the refined 2D sketch (SKC).

15. A non-transitory computer-readable storage medium storing instructions that, when executed by a processor, cause the processor to perform operations comprising:
receiving a 2D sketch (SKC) of an object (OBT);
generating a 3D-model (3DM) of the object (OBT) based on the 2D sketch (SKC);
**characterised in that** the operations further comprise:
generating the 3D-model (3DM) of the object (OBT) using an artificial intelligence model based on the 2D sketch (SKC);
applying one or more load points (LPT) to the 3D-model (3DM);
performing a structural analysis simulation on the 3D-model (3DM) with the applied load points (LPT); and
outputting simulation results (SRT) based on the structural analysis simulation.

16. The non-transitory computer-readable storage medium of claim 15, wherein generating the 3D-model (3DM) using the artificial intelligence model comprises:
encoding the 2D sketch (SKC) using a pretrained vision transformer;
generating an initial 3D voxel grid;
applying a discrete wavelet transform to the voxel grid;
performing diffusion-based shape refinement on the transformed grid; and
applying an inverse discrete wavelet transform to obtain the 3D-model (3DM).

17. The non-transitory computer-readable storage medium of claim 16, wherein the discrete wavelet transform reduces the dimension of the 3D-model (3DM) to a lower resolution grid.

18. The non-transitory computer-readable storage medium of claim 15, wherein the operations further comprise generating a smooth mesh of the 3D-model (3DM) prior to performing the structural analysis simulation.

19. The non-transitory computer-readable storage medium of claim 18, wherein the operations further comprise mapping the simulation results (SRT) onto the smooth mesh for visualization.

20. The non-transitory computer-readable storage medium of claim 19, wherein the operations further comprise:
determining whether the simulation results (SRT) are satisfactory;
if the simulation results (SRT) are not satisfactory, refining the 2D sketch (SKC); and
repeating the operations of generating the 3D-model (3DM), applying the load points (LPT),
performing the structural analysis simulation, and outputting the simulation results (SRT) using the refined 2D sketch (SKC).
